# EUROPÄISCHE PATENTANMELDUNG

(11) **EP 0 721 820 A1**
(43) Veröffentlichungstag der Anmeldung: **17.07.1996**
(21) Anmeldenummer: 95119886.0
(22) Anmeldetag: 15.12.1995
(51) Int. Cl.: B23Q 3/155, B25D 17/08, G05B 19/12

(54) **Kodierte Werkzeugaufnahme**

(30) Priorität: 14.01.1995 DE 19501026
(71) Anmelder: DreBo Werkzeugfabrik GmbH, D-88361 Altshausen (DE)
(72) Erfinder: Dreps, Klaus, D-88361 Altshausen (DE)
(74) Vertreter: Grättinger & Partner

(57) **Zusammenfassung**

Bei einer Einrichtung zur automatischen Erkennung werkzeugspezifischer Daten durch eine elektrische Handwerkzeugmaschine besitzt das Werkzeug im Bereich des Einsteckschafts (1) eine Drehmitnahmenut (2) deren der Drehrichtung entgegenstehenden Leerflanke (4) eine Kodierung aufweist. Mittels einer Lesevorrichtung werden der Kodierung entsprechende Signale erzeugt und an eine Steuereinheit der Werkzeugmaschine geleitet. Bevorzugt kommt eine mechanische Kodierung in Form von Kodierstufen (5) in Frage.

## Beschreibung

Die Erfindung betrifft eine Einrichtung zur automatischen Erkennung werkzeugspezifischer Daten bei in die Werkzeugaufnahme einer Werkzeugmaschine für auswechselbare Werkzeuge, insbesondere eine elektrische Handwerkzeugmaschine, eingesetztem Werkzeug in Art einer Schneidbohrers, Hammerbohrers, Meißels oder dgl., wobei das Werkzeug im Bereich seines Einsteckschafts eine Kodierung für die werkzeugspezifischen Daten aufweist und wobei in die Werkzeugaufnahme eine auf die Kodierung ausgerichtete Lesevorrichtung eingebaut ist, welche der Kodierung entsprechende Signale an eine Steuereinheit der Werkzeugmaschine leitet.

Eine derartige Vorrichtung ist aus der US-PS 5028057 bekannt. Dort ist die Ausbildung eines Einsteckschaftes für ein Werkzeug mit Verriegelungsnuten und Drehmitnahmenuten beschrieben, wobei letztere auf dem Nutgrund eine Kodierung mit werkzeugspezifischen Daten aufweisen. Diese Daten können sich auf die Art des Werkzeugs, z.B. Schneidbohrer oder Meißel, auf die Werkzeugabmessungen, z.B. den Bohrerdurchmesser, oder auf den Werkstoff, aus dem das Werkzeug gefertigt ist, z.B. zur Unterscheidung eines Hammerbohrers zum Bohren in Beton von einem einfachen Schneidbohrer zum Bohren in Holz, beziehen. Die bekannte Kodierung kann z.B. als auf dem Nutgrund aufgemalte Strichkodierung ausgebildet sein; sie kann auch aus Streifen unterschiedlicher Oberflächenrauhigkeit bestehen oder durch geometrische Unterscheidungsmerkmale, z.B. durch verschiedene Breiten und Tiefen der Drehmitnahmenut verwirklicht sein. Zum Lesen der Kodierung dienen dabei mechanische oder elektrische Sensoren, deren Signale entweder direkt an eine Kupplungssteuerung oder an eine elektronische Steuereinheit der Werkzeugmaschine geleitet werden, welche danach Maschinenparameter wie Drehzahl, Schnittgeschwindigkeit, die Ansprechzeit für eine Sicherheitskupplung, den langsamen Anlauf der Maschine oder dgl. steuert.

Ferner ist es aus der deutschen Offenlegungsschrift 3637128 bekannt, Betriebsdaten wie Drehzahl, Schnittgeschwindigkeit, Schlagfrequenz eines Elektrowerkzeugs oder dgl. vom Werkzeug unmittelbar auf das Antriebsgerät zu übertragen mit dem Ziel einer automatischen Einstellung des Antriebsgeräts auf werkzeugspezifische Daten auswechselbarer Werkzeuge. Gewissermaßen als geometrische Schnittstelle dient dabei werkzeugseitig der Einsteckschaft und geräteseitig die sog. Werkzeugaufnahme. Um das Ablesen der Kodierung zu ermöglichen, befindet sich diese außerhalb des Drehmomentsübertragungsbereichs des Einsteckschafts, nämlich zwischen diesem Bereich und dem eigentlichen Arbeitsbereich des Werkzeugs, wobei die Kodierung aus Kerben, Löchern oder Schlitzen besteht, die zwischen Stegen über den Werkzeugumfang verteilt angeordnet sind. Bei der Rotation des Werkzeugs wird die Kodierung mit Hilfe von Sensoren, die in der Werkzeugaufnahme des Antriebsgeräts eingebaut sind, berührungsfrei abgetastet, bspw. durch Verwendung magnetischer oder optischer Sensoren oder solcher, die nach Art induktiver Näherungsschalter arbeiten. Für alle Arten von Sensoren gilt, daß das Werkzeug sich unter den Sensoren hinwegdreht und der Sensor einen der Kodierung entsprechenden Signalwert liefert, der durch eine elektronische Auswerteeinrichtung in entsprechende Einstellbefehle für die Antriebseinheit des Antriebsgeräts der Werkzeugmaschine umgesetzt wird.

Demgegenüber liegt der vorliegenden Erfindung die Aufgabe zugrunde, den Einsteckschaft des Werkzeugs mit einer besonders einfachen geometrischen Kodierung zu versehen, welche bei stillstehender Werkzeugmaschine nach dem Einsetzen des Werkzeugs ablesbar ist, so daß mit dem Einschalten der Werkzeugmaschine bereits sämtliche relevanten Maschinendaten entsprechend den der Kodierung zugrundeliegenden werkzeugspezifischen Daten geschaltet sind; dabei soll die Kodierung so ausgestaltet sein, daß auch mit zunehmender Abnutzung des Werkzeugs eine eindeutige Ablesbarkeit der Kodierung sichergestellt ist.

Nach dem erfindungsgemäßen Vorschlag wird die eingangs genannte Einrichtung der obigen Aufgabenstellung dadurch gerecht, daß die Kodierung in wenigstens einer Drehmitnahmenut des Einsteckschafts auf deren der Drehrichtung entgegenstehenden Leerflanke angeordnet ist.

Auf diese Weise ist sichergestellt, daß die in der Drehmitnahmenut angeordnete Kodierung einer direkten Abnutzung durch den Werkzeugwechsel in der Werkzeugaufnahme nicht ausgesetzt ist. Dadurch, daß die Kodierung der Leerflanke der Mitnahmenut zugeordnet ist, wird zudem eine einwandfreie Positionierung der Lesevorrichtung und damit eine fehlerfreie Dekodierung ermöglicht.

Während bei aufgedruckten oder geätzten Kodierungen verschmutzungsbedingte Fehler bei deren Ablesung leicht möglich sind, läßt sich dieser Nachteil durch die erfindungsgemäß bevorzugte Kodierung in Form von Stufen mit bestimmter Breite und/oder Länge, welche in die Leerflanke eingearbeitet sind, vermeiden.

Bei einer derartigen geometrischen Kodierung bedeutet somit die auf der Leerflanke vorhandene Stufe entsprechend ihren Abmessungen einen spezifischen Werkzeugcode, welcher über ein der Lesevorrichtung zugrundeliegendes Programm erkennbar ist. Im einfachsten Fall ist dieser Code also durch nichts anderes repräsentiert als durch eine mechanisch ausgearbeitete Stufe auf der Leerflanke der Drehmitnahmenut, wobei die von der Lesevorrichtung erkannte Geometrie dieser Stufe bspw. eine Aussage über Art, Länge und Durchmesser des Werkzeugs zuläßt. Bevorzugt entspricht dabei die Länge der Kodierstufe der Werkzeuglänge und die Höhe der Kodierstufe dem Werkzeugdurchmesser.

Als Lesevorrichtung eignen sich elektronische, optische und mechanische Sensoren. Diese sind zweckmäßigerweise im Drehfutter aufgenommen, d.h. sie stehen relativ zum Werkzeug still, so daß eine Ablesung nach jedem Werkzeugwechsel bei noch stillstehender Werkzeugmaschine möglich ist.

Nach einer besonders einfachen Ausführungsform ist vorgesehen, daß die Sensoren Taststifte sind, welche bspw. induktiv betätigt werden können derart, daß der induzierte elektrische Strom als Maß für den jeweiligen Hub des Taststifts erkannt und in ein Signal für die Höhe der jeweils gemessenen Kodierstufe umgewandelt werden kann.

Um unterschiedliche Längen der Kodierstufen erfassen zu können, ist erfindungsgemäß vorgesehen, daß in Längsrichtung der Drehmitnahmenut mehrere Sensoren in nach der Längenkodierung der Kodierstufen vorgegebenen Abständen angeordnet sind. Es sind auch in Umfangsrichtung versetzt angeordnete Sensoren vorstellbar, nämlich dann, wenn die Breite der Kodierstufen von Bedeutung ist und eine mechanische Erkennung durch Taststifte vorgesehen ist. Hingegen ermöglichen optische oder elektronische Sensoren eine direkte Messung der Breite und der Tiefe einer Kodierungsstufe, so daß ein Sensor je Längenabschnitt ausreichend ist.

Neben einer Einrichtung zur automatischen Erkennung werkzeugspefizischer Daten der eingangs genannten Art umfaßt die vorliegende Erfindung auch ein entsprechend ausgebildetes Werkzeug mit einem Einsteckschaft zum Einsetzen in eine Werkzeugaufnahme einer Werkzeugmaschine, wobei der Einsteckschaft für den Eingriff von Antriebsleisten der Werkzeugaufnahme Drehmitnahmenuten aufweist, welche eine Kodierung für werkzeugspezifische Daten enthalten, die auf der der Drehrichtung entgegenstehenden Leerflanke der Drehmitnahmenut angeordnet ist. In Ausgestaltung dieser Kodierung kommen bevorzugt in Längsrichtung der Drehmitnahmenut verlaufende Kodierungsstufen in Frage. In dem Fall, daß drei kodierte spezifische Werkzeugdaten ausreichen, wie bspw. Art, Länge und Durchmesser eines Werkzeugs, kommt man mit einer in ihrem Querschnitt gleichbleibenden Kodierungsstufe aus. Bei deren Abtastung ergeben sich entsprechend deren Höhe, Breite und Tiefe unterschiedliche Sensorsignale, die von der Leseeinheit an eine Steuereinheit der Werkzeugmaschine weitergeleitet werden.

Für den Fall, daß mehr als drei Daten je Werkzeug für die Einstellung der Werkzeugmaschine erwünscht sind, kann eine Kodierstufe aus verschiedenen Längenabschnitten zusammengesetzt sein, wobei erst durch mehrfache Abtastung der Kodierstufe in ihrer Längsrichtung eine Dekodierung möglich ist.

Im folgenden wird eine Ausführungsform der Erfindung anhand der Zeichnung beschrieben. Es zeigt
- Fig. 1: einen Werkzeugschaft in der Draufsicht auf eine Drehmitnahmenut mit Kodierstufe,
- Fig. 2: einen Axialschnitt gemäß II-II der Fig. 1, und
- Fig. 3: einen Querschnitt durch die Werkzeugaufnahme mit eingesetztem Werkzeug und einem Taststift-Sensor.

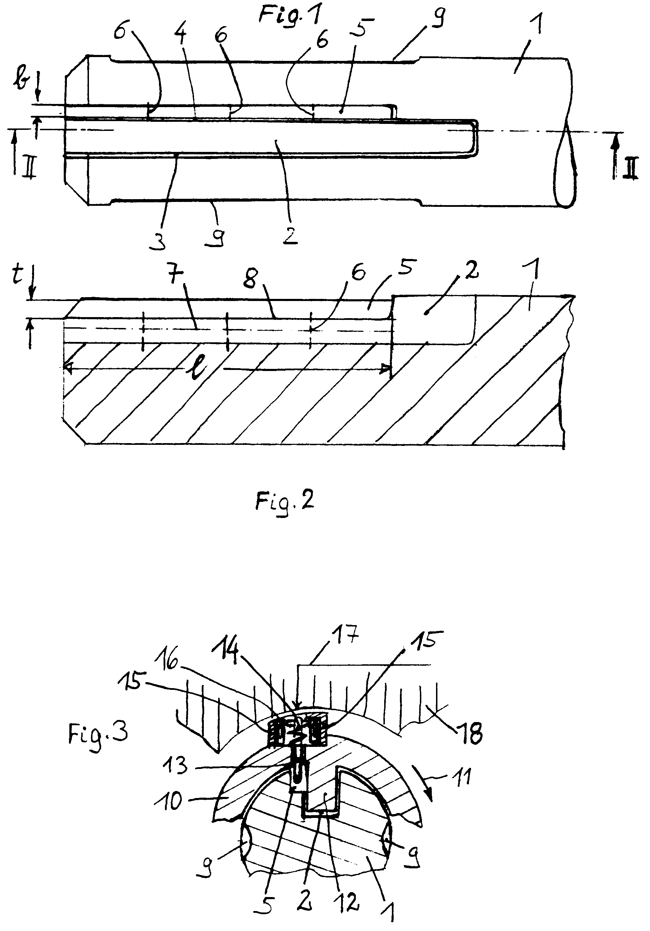

Fig. 1 zeigt einen Abschnitt eines Werkzeugs im Bereich des Einsteckschafts 1. Der Einsteckschaft 1 besitzt eine Drehaufnahmenut 2 mit leicht abgeschrägter Nutflanke 3 auf der Antriebsseite. Ferner besitzt die Drehmitnahmenut 2 eine entsprechend abgeschrägte Leerflanke 4, welche durch eine Kodierstufe 5 erweitert ist. Die Kodierstufe 5 besitzt eine einheitliche Querschnittsabmessung mit der Länge l, der Breite b und der Tiefe t. Diese Abmessungen entsprechen kodierten Informationen über werkzeugspezifische Daten. Entsprechend diesen geometrischen Abmessungen der Kodierstufe ergeben die von einer Leseeinheit an die Maschinensteuerung weitergeleiteten Signale jene Einstelldaten der Maschine, welche deren Arbeitsweise wie bspw. die Drehzahl bei einem Bohrwerkzeug, festlegen.

Strichlierte Querlinien 6 quer zur Kodierstufe 5 sollen unterschiedliche Längen der Kodierstufen 5 andeuten (sh. Fig. 1); eine strichpunktierte Linie 7 unterhalb des Stufengrunds 8 der Kodierstufen 5 soll eine zweite Tiefenabstufung der Kodierstufe andeuten (sh. Fig. 2). Für den Fachmann ist ohne weiteres erkennbar, daß neben der Länge und der Tiefe auch verschiedene Abmessungen nach der Breite der Kodierstufe möglich sind, wobei entsprechend der von der Lesevorrichtung gemessenen Geometrie einer Kodierstufe die entsprechenden Informationen für die Einstellung der Betriebsdaten der Maschine von deren Steuereinheit erkannt werden.

Neben der Drehmitnahmenut 2 mit der Kodierstufe 5 weist der Einsteckschaft 1 noch zwei diametral gegenüberliegende, der axialen Arretierung des Werkzeugs dienende Verriegelungsnuten 9 auf, in welche nicht dargestellte kugelförmige oder walzenförmige Verriegelungskörper eintreten.

Fig. 3 zeigt einen schematischen Querschnitt durch einen Einsteckschaft 1 eines Werkzeugs mit einer Drehaufnahmenut 2 und zwei Verriegelungsnuten 9, die gegenüber der Drehaufnahmenut 2 jeweils um 90° versetzt sind. Der Einsteckschaft 1 steckt im Futter 10 einer Werkzeugaufnahme, welches in Richtung des Pfeils 11 antreibbar ist. Das Futter 10 besitzt eine Antriebsleiste 12, welche in die Drehmitnahmenut 2 eintritt und entsprechend der Drehrichtung des Futters 10 das Werkzeug mitnimmt. Seitlich und mit einer geringeren Tiefe bezogen auf die Drehmitnahmenut 2 ist eine Kodierstufe 5 gezeichnet, in welche ein im Futter 10 sitzender Taststift 13 teilweise eindringt. Entsprechend der gewählten vereinfachten Darstellungen des Taststifts 13 wird dieser durch eine Druckfeder 14 gegen einen Anschlag eines Gehäuseteils 15 nach außen gehalten. Mittels einer im Gehäuseteil 15 angeordneten Induktionsspule 16 wird der Taststift 13 in radialer Richtung ausgefahren, bis er den Grund der Kodierstufe 5 erreicht. Dementsprechend ist im Maschinengehäuse 18 eine (nicht dargestellte) Erregerwicklung vorgesehen, mittels welcher die Induktionsspule 16 erregt wird. Der dabei in der Erregerwicklung gemessene Strom, welcher der Höhe der Kodierstufe 5 entspricht, erzeugt ein elektrisches Signal, welches über eine Signalleitung 17 in dem das Bohrfutter 10 umgebenden Maschinengehäuse 18 an die Steuereinheit der Werkzeugmaschine weitergeleitet wird.

Ein in Fig. 3 beispielhaft dargestellte Taststift-Sensor ist jeweils innerhalb eines jeden durch die Querlinien 6 definierten Längenabschnitts der Drehmitnahmenut 2 vorgesehen.

## Patentansprüche

1. Einrichtung zur automatischen Erkennung werkzeugspezifischer Daten bei in die Werkzeugaufnahme einer Werkzeugmaschine für auswechselbare Werkzeuge, insbesondere einer elektrischen Hand-Werkzeugmaschine, eingesetztem Werkzeug in Art eines Schneidbohrers, Hammerbohrers, Meißels oder dgl., wobei das Werkzeug im Bereich seines Einsteckschafts (1) eine Kodierung für die werkzeugspezifischen Daten aufweist und wobei in die Werkzeugaufnahme eine auf die Kodierung ausgerichtete Lesevorrichtung eingebaut ist, welche der Kodierung entsprechende Signale an eine Steuereinheit der Werkzeugmaschine leitet,
dadurch gekennzeichnet,
daß die Kodierung in wenigstens einer Drehmitnahmenut (2) des Einsteckschafts (1) auf deren der Drehrichtung entgegenstehenden Leerflanke (4) angeordnet ist.

2. Einrichtung nach Anspruch 1,
dadurch gekennzeichnet,
daß die Kodierung in Form von Stufen mit bestimmter Breite, Höhe und/oder Länge in die Leerflanke (4) eingearbeitet ist.

3. Einrichtung nach Anspruch 2,
dadurch gekennzeichnet,
daß die Geometrie der Kodierstufen (5) nach Art, Länge und Durchmesser des Werkzeugs bestimmt ist.

4. Einrichtung nach Anspruch 3,
dadurch gekennzeichnet,
daß die Länge der Kodierstufen (5) der Werkzeuglänge entspricht.

5. Einrichtung nach Anspruch 3,
dadurch gekennzeichnet,
daß die Höhe der Kodierstufen (5) dem Werkzeugdurchmesser entspricht.

6. Einrichtung nach Anspruch 1,
daß die Lesevorrichtung in einem Futter (10) der Werkzeugaufnahme aufgenommene Sensoren umfaßt, welche nach jedem Werkzeugwechsel bei noch stillstehender Werkzeugmaschine arbeiten.

7. Einrichtung nach Anspruch 1,
dadurch gekennzeichnet,
daß als Sensoren Taststifte (13) vorgesehen sind.

8. Einrichtung nach Anspruch 7,
dadurch gekennzeichnet,
daß die Taststifte (13) induktiv betätigt werden und daß der induzierte elektrische Strom als Maß für den jeweiligen Hub des Taststifts (13) erkannt und in ein Signal für die Höhe der Kodierstufen (5) umgewandelt wird.

9. Einrichtung nach Anspruch 6,
dadurch gekennzeichnet,
daß in Längsrichtung der Drehmitnahmenut (2) mehrere Sensoren in nach der Längenkodierung der Kodierstufen (5) vorgegebenen Abständen angeordnet sind.

10. Werkzeug mit einem Einsteckschaft (1) zum Einsetzen in eine Werkzeugaufnahme einer Werkzeugmaschine, wobei der Einsteckschaft für den Eingriff von Antriebsleisten der Werkzeugaufnahme Drehmitnahmenuten (2) aufweist, welche eine Kodierung für werkzeugspezifische Daten enthalten,
dadurch gekennzeichnet,
daß die Kodierung auf der der Drehrichtung entgegenstehenden Leerflanke (4) der Drehmitnahmenut (2) angeordnet ist.

11. Werkzeug nach Anspruch 10,
dadurch gekennzeichnet,
daß die Kodierung in Form von Stufen mit bestimmter Breite, Höhe und/oder Länge in die Leerflanke (4) eingearbeitet ist.

12. Werkzeug nach Anspruch 11,
dadurch gekennzeichnet,
daß die Geometrie der Kodierstufen (5) nach Art, Länge und Durchmesser des Werkzeugs bestimmt ist.
